# EUROPÄISCHE PATENTSCHRIFT

(11) **EP 2 210 156 B1**
(45) Veröffentlichungstag und Bekanntmachung des Hinweises auf die Patenterteilung: **19.10.2016**
(21) Anmeldenummer: 08849435.6
(22) Anmeldetag: 14.11.2008
(51) Int. Cl.: G05B 19/042

(54) **VERFAHREN ZUM BETREIBEN EINES FELDGERÄTES**
METHOD FOR OPERATING A FIELD DEVICE
PROCÉDÉ D'EXPLOITATION D'UN APPAREIL DE TERRAIN

(30) Priorität: 15.11.2007 DE 102007054923
(43) Veröffentlichungstag der Anmeldung: 28.07.2010
(73) Patentinhaber: Endress+Hauser Process Solutions AG, 4153 Reinach (CH)
(72) Erfinder: KAISER, Ulrich, CH-4057 Basel (CH); REINKENSMEIER, Jörg, 79585 Steinen (DE); THOREN, Werner, 79585 Steinen (DE)
(74) Vertreter: Andres, Angelika Maria
(86) Internationale Anmeldenummer: PCT/EP2008/065560
(87) Internationale Veröffentlichungsnummer: WO 2009/063053

(56) Entgegenhaltungen:
- EP-A- 1 263 111
- EP-A1- 1 840 684
- WO-A-2007/073868
- DE-A1- 10 119 637
- DE-A1-102004 020 393
- DE-A1-102005 062 419
- DE-A1-102005 063 054
- DE-A1-102006 009 979
- US-A1- 2004 104 705
- US-A1- 2007 161 273
- US-B1- 6 957 158

## Beschreibung

Die Erfindung bezieht sich auf ein Verfahren zum Betreiben eines Feldgerätes der industriellen Prozess- und/oder Automatisierungstechnik, wobei das Feldgerät zumindest zeitweise von einer Energiequelle mit elektrischer Energie versorgt wird. Bei dem Feldgerät handelt es sich beispielsweise um einen Messaufnehmer oder um einen Aktor.

In der modernen industriellen Prozess- und/oder Automatisierungstechnik sind sog. Zwei-Leiter-Geräte bekannt, bei weichen die Übertragung von Daten und die Energieversorgung des Gerätes über die gleiche Schnittstelle erfolgt. Bekannt sind hier 4...20 mA Signale oder die Verwendung des HART (Highway Addressable Remote Transducer)-Protokolls.

In vielen Anwendungen werden normalerweise solche - klassisch verdrahteten - 4...20 mA HART-Geräte in einer Prozessanlage mit 24 V Gleichspannung versorgt. Durch die Kabelverbindung kommt es ggf. zu einem Spannungsabfall, so dass üblicherweise davon ausgegangen wird, dass ein HART-Gerät nicht mehr als 16 V Gleichspannung benötigt. Manche Feldgeräte benötigen sogar geringere Spannungen.

Eine Entwicklung geht in Richtung kabelloser Kommunikation und Energieversorgung. Hierfür sind entweder die Feldgeräte selbsttätig in der Lage, z.B. über Funk zu kommunizieren, oder es werden entsprechende Kommunikationseinheiten vorgesehen, welche mit den Feldgeräten verbunden werden und welche für die kabellose Kommunikation sorgen. Für die Energieversorgung werden beispielsweise frei vorhandene Energiequellen (z.B. Licht) oder Batterien verwendet. Bei Batterien ist es dabei erforderlich, dass diese ggf. ausgetauscht werden, so dass eine möglichst hohe Lebensdauer erzielt wird.

Die DE 10 2006 009 979 A1 offenbart eine Einrichtung zur drahtlosen Kommunikation mit einem Feldgerät. Zur Minimierung des Energieverbrauchs ist eine Energiemanagementeinheit vorhanden, durch welche das Feldgerät zu vorgegeben Zeiten mit der erforderlichen Betriebsenergie versorgbar ist und durch welche die Betriebsenergie des Feldgeräts in vorgegebenen Ruhezeiten abschaltbar ist. Diese Zeiten werden durch eine vorherige Parametrierung eingegeben.

Die Aufgabe der Erfindung besteht darin, ein Verfahren vorzuschlagen, mit welchem ein Feidgerät für den Batteriebetrieb optimiert ist.

Die Erfindung löst die Aufgabe dadurch, dass der minimal vom Feldgerät erforderliche Spannungsbedarf ermittelt wird, wobei der minimale Spannungsbedarf durch Auslesen eines in dem Feldgerät oder in dem Speiseadapter hinterlegten Werts oder durch Austesten des minimalen Spannungsbedarfes vom Speiseadapter ermittelt wird, dass aus dem ermittelten minimal erforderlichen Spannungsbedarf ein Versorgungsspannungswert ermittelt wird, und dass das Feldgerät zumindest zeitweise mit elektrischer Energie versorgt wird, deren Spannung unterhalb oder im Wesentlichen gleich dem ermittelten Versorgungsspannungswert ist. Erfindungsgemäß wird somit der minimale Spannungsbedarf des Feldgerätes ermittelt, d.h. es wird bestimmt, welche Spannung minimal erforderlich ist, damit das Feldgerät funktionieren kann. Ausgehend davon wird ein Versorgungsspannungswert ermittelt bzw. vorgegeben bzw. aus hinterlegten Daten entnommen bzw. über solche berechnet. Dieser Versorgungsspannungswert wird bei der anschließenden Energieversorgung vorzugsweise nicht überschritten, um Energie über die Reduktion der zur Verfügung gestellten elektrischen Spannung einzusparen. Sollte beispielsweise für gewisse Zeiträume eine höhere Energiemenge vorhanden bzw. erforderlich sein, so kann das Feldgerät jedoch auch mit einer höheren Spannung versorgt werden. Im einfachsten Fall ist der Versorgungsspannungswert gleich der minimal erforderlichen Spannung. In einer anderen Ausgestaltung wird beim Versorgungsspannungswert noch berücksichtigt, dass es z.B. über die Verbindung zwischen der Energiequelle und dem Feldgerät zu Spannungsverlusten kommt, d.h. der Versorgungsspannungswert liegt oberhalb der minimal erforderlichen Spannung. Endgültig wird dem Feldgerät somit soviel Spannung zugeführt, wie ausreichend für den Betrieb des Gerätes ist. Damit geht einher, dass die Energiequelle passend geschont und somit deren Lebensdauer erhöht wird. Das Feldgerät ist dabei beispielsweise ein Messgerät/Sensor oder ein Aktor. In gewissen Zeiträumen kann es vorgesehen sein, dass das Feldgerät "schlafen gelegt" wird, wobei das Feldgerät mit einer geringeren Spannung, insbesondere mit einer im Wesentlichen gleich Null gesetzten Spannung betrieben wird. In anderen Zeiträumen kann es vorgesehen sein, das Feldgerät mit einer Spannung unterhalb des minimalen Werts zu versorgen. In diesen Fällen würde das Feldgerät beispielsweise die Energie speichern und erst beim Erreichen eines bestimmten Wertes sein Arbeiten aufnehmen. Es kann auch vorgesehen sein, dass bei dieser Unterversorgung das Feldgerät Funktionalitäten oder Peripherien gezielt abschaltet oder nur eine Kernfunktionalität ausführt.

Erfindungsgemäß wird das Feldgerät mit dem Speiseadapter verbunden und der minimal erforderliche Spannungsbedarf durch den Speiseadapter ermittelt. Ein Speiseadapter ist somit beispielsweise eine Steuereinheit, welche mit einem üblichen Feldgerät verbunden wird und welche dabei beispielsweise auch die Anpassung an die kabellose Bedienung vornimmt. In einer Ausgestaltung ist der Speiseadapter auch für die kabellose Kommunikation mit bzw. von dem Feldgerät vorgesehen, so dass es sich insgesamt um einen Kommunikations- und Speiseadapter handelt. Dies ließe sich auch als kombinierte Speise- und Kommunikationseinheit bezeichnen.

Eine Ausgestaltung sieht vor, dass der minimal erforderliche Spannungsbedarf mindestens anhand hinterlegter Daten ermittelt wird. Die Daten befinden sich dabei beispielsweise in technischen Informationen oder sind in Form von Software abgelegt.

Eine Ausgestaltung beinhaltet, dass ermittelt wird, um was für einen Typ von Feldgerät es sich handelt, und dass der minimal erforderliche Spannungsbedarf mindestens anhand dem Feldgerät zugeordneter hinterlegter Daten ermittelt wird. Der Typ des Feldgerätes - also Modell, Messprinzip, Hersteller, Variante, Herstellungsjahr etc. - wird dabei beispielsweise manuell eingegeben oder wird vom Feldgerät selbst abgefragt.

Eine Ausgestaltung sieht vor, dass ermittelt wird, mit welcher Konfiguration das Feldgerät betrieben wird, und dass der minimal erforderliche Spannungsbedarf mindestens anhand dem Typ des Feldgeräts und der Konfiguration zugeordneter hinterlegter Daten ermittelt wird. Je nach Messbereich oder Messgenauigkeit oder z.B. je nach angeschlossener Peripherie kann der Energie- bzw. Spannungsbedarf des Feldgerätes unterschiedlich sein, so dass dies bei der Festlegung des Spannungsbedarfs zu berücksichtigen ist. Ggf. ist mit dem Typ des Feldgerätes auch der maximal zu erwartende Spannungsbedarf assoziiert, so dass bei der realen Umsetzung, welche ggf. nicht alle Funktionalitäten umfasst, entsprechend weniger Spannung ausreichend ist.

Eine Ausgestaltung beinhaltet, dass der minimal erforderliche Spannungsbedarf derartig ermittelt wird, dass die Spannung der elektrischen Energie, mit welcher das Feldgerät versorgt wird, variiert wird. In dieser Ausgestaltung wird somit ausgetestet, welches die minimale Spannung ist. Dafür wird beispielsweise die Spannung solange erhöht, bis das Feldgerät eine passende Statusmeldung abgibt.

Eine Ausgestaltung beinhaltet, dass mindestens während einer Standby-Phase das Feldgerät mit einer elektrischen Spannung versorgt wird, welche unterhalb des Versorgungsspannungswerts liegt. Das Feldgerät wird somit zumindest zeitweise in einen Schlafzustand versetzt. Insbesondere bei batteriebetriebenen oder allgemein kabellos betriebenen Feldgeräten wird üblicherweise von einem dauernden Betrieb abgesehen; vielmehr werden in dem Fall, dass es sich bei dem Feldgerät um einen Sensor handelt, die Messwerte in größeren Abständen aufgenommen, so dass es problemlos möglich ist, das Feldgerät für die Zwischenzeit abzuschalten bzw. in den Schlafzustand/Stand-by zu versetzen. In einer Ausgestaltung wird insbesondere die Energieversorgung zwischenzeitig vollständig abgeschaltet.

Eine Ausgestaltung sieht vor, dass die für einen Spannungsverlust relevante Länge der Verbindung zwischen Feldgerät und Energiequelle ermittelt wird, und dass der Versorgungsspannungswert mindestens in Abhängigkeit von der ermittelten relevanten Länge ermittelt wird. Handelt es sich insbesondere um eine Kabelverbindung zwischen dem Feldgerät und der Energiequelle, so treten durch die Kabel Spannungsverluste auf, die bei der Ermittlung bzw. Bestimmung bzw. Berechnung des Versorgungsspannungswerts aus dem minimal erforderlichen Spannungswert zu berücksichtigen sind.

Eine Ausgestaltung beinhaltet, dass als Energiequelle mindestens eine Batterie verwendet wird. Unter Batterie seien hierbei auch Akkumulatoren verstanden

Eine Ausgestaltung sieht vor, dass aus dem Feldgerät mindestens eine Information über den minimal erforderlichen Spannungsbedarf ausgelesen wird. Das Feldgerät führt somit beispielsweise in einem internen Speicher die Informationen über seinen minimalen Spannungsbedarf mit sich mit. Dieser Wert wird dann z.B. von dem o.g. Speiseadapter ausgelesen und für die Ermittlung der Versorgungsspannung herangezogen.

Die Erfindung wird anhand der nachfolgenden Zeichnungen näher erläutert. Es zeigt:
Fig. 1: einen schematischen Aufbau einer Umsetzung des erfindungsgemäßen Verfahrens, und
Fig. 2: der Aufbau der Fig. 1 mit einer detaillierten Darstellung des Speiseadapters.

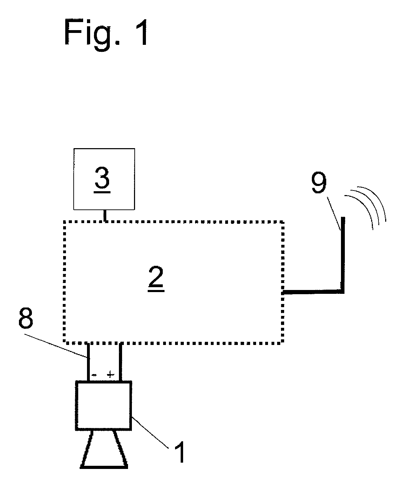

In der Fig. 1 ist schematisch eine Umsetzung des erfindungsgemäßen Verfahrens dargestellt bzw. zu sehen ist insbesondere ein Speiseadapter 3, welcher der Umsetzung der Erfindung dient und entsprechend ausgestaltet ist.

Dargestellt ist ein Feldgerät 1, bei welchem es sich als Beispiel um einen Messaufnehmer bzw. einen Sensor zur Bestimmung und/oder Überwachung eines Füllstands eines Mediums in einem Behälter über die Verwendung von Mikrowellen oder Radar handelt. In einer anderen Ausgestaltung handelt es sich bei dem Feldgerät 1 beispielsweise um einen Aktor. Insbesondere handelt es sich bei dem Feldgerät 1 um ein Zweileiter oder HART-Gerät.

Das Feldgerät 1 ist mit dem Speiseadapter 2 mechanisch und elektrisch über eine Verbindungseinheit 8, bei welcher es sich um zwei Kabel handelt, verbunden. Der Adapter 2 dient dabei der Energieversorgung und auch der weitergehenden Kommunikation der Signale bzw. Messwerte des Messaufnehmers 1 innerhalb beispielsweise eines drahtlosen Netzwerkes über die Antenne 9. Der Speiseadapter 2 ist mit einer Energiequelle 3 verbunden, bei welcher es sich beispielsweise um eine Batterie handelt. Insgesamt ist somit das Feldgerät 1 mit einem batteriebetriebenen Kommunikations- und Speiseadapter 2 verbunden. Damit die Energiequelle 3 eine möglichst hohe Lebensdauer hat, wird das erfindungsgemäße Verfahren angewendet. Dabei wird zunächst ermittelt, was die minimale Spannung ist, welche das Feldgerät 1 für den Betrieb benötigt. Dieser Wert ist u.a. abhängig vom Typ des Feldgerät 1 selbst, aber auch von der speziellen Konfiguration des Feldgeräts 1. Weiterhin ist auch die Verbindungsstrecke zwischen Feldgerät 1 und Energiequelle 3 relevant. Dafür wird ausgehend vom minimalen Spannungsbedarf ein Versorgungsspannungswert ermittelt, welcher bei der Energieversorgung des Feldgerätes 1 während des normalen Betriebes nicht unterschritten werden sollte, damit das Feldgerät 1 sicher arbeiten kann, z.B. zuverlässig seine Messwerte bestimmt. In den Schlaf- oder Standby-Phasen wiederum wird der Wert ggf. unterschritten, um mehr Energie einzusparen. Der minimal erforderliche Spannungswert wird dabei beispielsweise bestimmt, indem der Wert im Feldgerät 1 oder im Adapter 2 hinterlegt wird oder indem er durch entsprechende Eingabemöglichkeiten eingestellt wird oder indem er beispielsweise durch Austesten bzw. Variieren des Spannungswertes direkt vom Adapter 2 ermittelt wird. Für die letztere Variante wird beispielsweise die Spannung solange erhöht, bis das Feldgerät 1 eine entsprechende Meldung ausgibt.

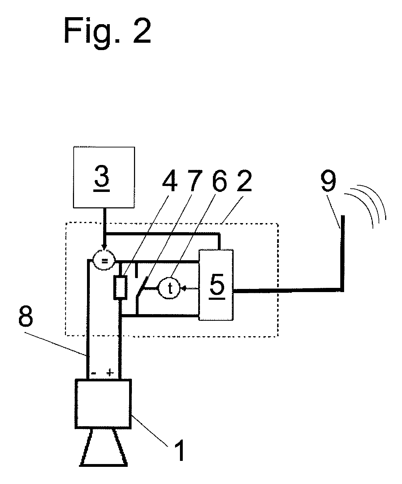

Die Fig. 2 zeigt mehr Details eines Speiseadapters 2. Die Kommunikation der Signale vom Messaufnehmer 1 zum Speiseadapter 2 erfolgt vermittels von HART-Signalen, welcher im Speiseadapter 2 über den Kommunikationswiderstand 4 abgegriffen werden. Der Spannungsbedarf wird hier derartig reduziert, dass eine Steuereinheit 5 über ein Zeitglied 6 eine Überbrückungseinheit 7 steuert. Diese Überbrückungseinheit 7, welche hier ein Schalter ist, überbrückt den Kommunikationswiderstand 4 solange, wie das Feldgerät noch keinen Messwert liefert, d.h. insbesondere über einen einstellbaren Zeitraum nach dem Einschalten des Feldgerätes 1, d.h. für die Zeitdauer des Hochfahrens des Feldgerätes 1. In dieser Zeit wird verhindert, dass es zu einem Spannungsabfall am Kommunikationswiderstand 4 kommt.

### Bezugszeichenliste

**Tabelle 1**

| | |
|---|---|
| 1 | Feldgerät |
| 2 | Speiseadapter |
| 3 | Energiequelle |
| 4 | Kommunikationswiderstand |
| 5 | Steuereinheit |
| 6 | Zeitglied |
| 7 | Überbrückungseinheit |
| 8 | Verbindungseinheit |
| 9 | Antenne |

## Patentansprüche

1. Verfahren zum Betreiben eines Feldgerätes (1) der industriellen Prozess- und/oder Automatisierungstechnik, wobei das Feldgerät (1) mit einem Speisadapter (2) verbunden wird und das Feldgerät (1) zumindest zeitweise von einer Energiequelle (3) mit elektrischer Energie versorgt wird,
**dadurch gekennzeichnet,**
**dass** der minimale Spannungsbedarf des Feldgerätes (1), der erforderlich ist damit das Feldgerät (1) zumindest zuverlässig seine Messwerte bestimmt, durch den Speiseadapter (2) ermittelt wird, wobei der minimale Spannungsbedarf durch Auslesen eines in dem Feldgerät (1) oder in dem Speiseadapter (2) hinterlegten Werts oder durch Austesten des minimalen Spannungsbedarfes vom Speiseadapter (2) ermittelt wird,
**dass** aus dem ermittelten minimal erforderlichen Spannungsbedarf ein Versorgungsspannungswert vorgegeben wird,
und
**dass** das Feldgerät (1) zumindest zeitweise mit einer elektrischen Energie versorgt wird, deren Spannung unterhalb oder im Wesentlichen gleich dem vorgegebenen Versorgungsspannungswert ist.

2. Verfahren nach Anspruch 1,
wobei der minimal erforderliche Spannungsbedarf mindestens anhand hinterlegter Daten ermittelt wird.

3. Verfahren nach Anspruch 2,
wobei ermittelt wird, um was für einen Typ von Feldgerät (1) es sich handelt, und wobei der minimal erforderliche Spannungsbedarf mindestens anhand dem Feldgerät (1) zugeordneter hinterlegter Daten ermittelt wird.

4. Verfahren nach Anspruch 3,
wobei ermittelt wird, mit welcher Konfiguration das Feldgerät (1) betrieben wird, und
wobei der minimal erforderliche Spannungsbedarf mindestens anhand dem Typ des Feldgerät (1) und der Konfiguration zugeordneter hinterlegter Daten ermittelt wird.

5. Verfahren nach mindestens einem der Ansprüche 1 bis 4,
wobei der minimal erforderliche Spannungsbedarf derartig ermittelt wird, dass die Spannung der elektrischen Energie, mit welcher das Feldgerät (1) versorgt wird, variiert wird.

6. Verfahren nach mindestens einem der Ansprüche 1 bis 5, **dadurch gekennzeichnet, dass** mindestens während einer Standby-Phase das Feldgerät (1) mit einer elektrischen Spannung versorgt wird, welche unterhalb des Versorgungsspannungswerts liegt.

7. Verfahren nach mindestens einem der Ansprüche 1 bis 6,
wobei die für einen Spannungsverlust relevante Länge der Verbindung zwischen Feldgerät (1) und Energiequelle (3) ermittelt wird,
und wobei der Versorgungsspannungswert mindestens in Abhängigkeit von der ermittelten relevanten Länge ermittelt wird.

8. Verfahren nach mindestens einem der Ansprüche 1 bis 7,
wobei als Energiequelle (3) mindestens eine Batterie verwendet wird.

9. Verfahren nach mindestens einem der Ansprüche 1 bis 8,
wobei aus dem Feldgerät (1) mindestens eine Information über den minimal erforderlichen Spannungsbedarf ausgelesen wird.

## Claims

1. Procedure for operating a field device (1) used in industrial process and/or automation technology, wherein the field device (1) is connected to a power adapter (2) and the field device (1) is at least temporarily supplied with electrical energy from an energy source (3),
**characterized in that**
the minimum voltage demand of the field device (1), which is necessary so that the field device (1) can at least reliably determine its measured values, is determined by the power adapter (2), wherein the minimum voltage demand is determined by reading out a value stored in the field device (1) or in the power adapter (2), or by the test of the minimum voltage demand performed by the power adapter (2),
**in that** a supply voltage value is specified from the minimum required voltage demand determined,
and
**in that** the field device (1) is at least partially supplied with electrical energy whose voltage is below or essentially the same as the specified supply voltage value.

2. Procedure as claimed in Claim 1,
wherein the minimum required voltage demand is determined at least using stored data.

3. Procedure as claimed in Claim 2,
wherein the type of field device (1) is determined and wherein the minimum required voltage demand is determined at least using stored data assigned to the field device (1).

4. Procedure as claimed in Claim 3,
wherein the configuration with which the device is operated is determined and wherein the minimum required voltage demand is determined at least on the basis of the type of field device (1) and stored data assigned to the configuration.

5. Procedure as claimed in at least one of the Claims 1 to 4,
wherein the minimum required voltage demand is determined in such a way that the voltage of the electrical energy supplied to the field device (1) is varied.

6. Procedure as claimed in at least one of the Claims 1 to 5,
**characterized in that** the field device (1) is supplied with an electric voltage that is below the supply voltage value at least during a stand-by phase.

7. Procedure as claimed in at least one of the Claims 1 to 6,
wherein the length of the connection between the field device (1) and the energy source (3), which is relevant for voltage loss, is determined and wherein the supply voltage value is determined at least depending on the determined relevant length.

8. Procedure as claimed in at least one of the Claims 1 to 7,
wherein at least a battery is used as the energy source (3).

9. Procedure as claimed in at least one of the Claims 1 to 8,
wherein at least information about the minimum required voltage demand is read out of the field device (1).

## Revendications

1. Procédé destiné à l'exploitation d'un appareil de terrain (1) de la technique des processus et de l'automatisation industriels, pour lequel l'appareil de terrain (1) est relié avec un adaptateur d'alimentation (2) et l'appareil de terrain (1) est alimenté au moins temporairement par une source d'énergie (3) électrique,
**caractérisé**
**en ce que** le besoin minimal en tension de l'appareil de terrain (1), qui est nécessaire afin que l'appareil de terrain (1) détermine au moins de façon fiable ses valeurs mesurées, est déterminé par l'adaptateur d'alimentation (2), le besoin minimal en tension étant déterminé par la lecture d'une valeur enregistrée dans l'appareil de terrain (1) ou dans l'adaptateur d'alimentation (2), ou par le test du besoin minimal en tension par l'adaptateur d'alimentation (2),
**en ce qu'**une valeur de tension d'alimentation est prédéfinie à partir du besoin minimal en tension requis déterminé,
et
**en ce que** l'appareil de terrain (1) est alimenté au moins temporairement en énergie électrique, dont la tension est inférieure ou pour l'essentiel égale à la valeur de tension d'alimentation prédéfinie.

2. Procédé selon la revendication 1,
pour lequel le besoin minimal en tension est déterminé au moins au moyen de données enregistrées.

3. Procédé selon la revendication 2,
pour lequel est déterminé de quel type d'appareil de terrain (1) il s'agit, et pour lequel le besoin minimal en tension est déterminé au moins au moyen de données enregistrées affectées à l'appareil de terrain (1).

4. Procédé selon la revendication 3,
pour lequel est déterminé avec quelle configuration l'appareil de terrain (1) est exploité, et pour lequel le besoin minimal en tension requis est déterminé au moins au moyen du type d'appareil de terrain (1) et des données enregistrées affectées à la configuration.

5. Procédé selon au moins l'une des revendications 1 à 4,
pour lequel le besoin minimal en tension requis est déterminé de telle sorte que la tension de l'énergie électrique, avec laquelle l'appareil de terrain (1) est alimenté, est variée.

6. Procédé selon au moins l'une des revendications 1 à 5,
**caractérisé en ce qu'**au moins pendant une phase de veille, l'appareil de terrain (1) est alimenté avec une tension électrique, laquelle est inférieure à la valeur de la tension d'alimentation.

7. Procédé selon au moins l'une des revendications 1 à 6,
pour lequel est déterminée la longueur pertinente pour une chute de tension de la liaison entre l'appareil de terrain (1) et la source d'énergie (3),
et pour lequel la valeur de tension d'alimentation est déterminée au moins en fonction de la longueur pertinente déterminée.

8. Procédé selon au moins l'une des revendications 1 à 7,
pour lequel est utilisée au moins une batterie comme source d'énergie (3).

9. Procédé selon au moins l'une des revendications 1 à 8,
pour lequel est lue à partir de l'appareil de terrain (1) au moins une information concernant le besoin minimal en tension requis.
